# EUROPÄISCHE PATENTSCHRIFT

(11) **EP 4 244 923 B1**
(45) Veröffentlichungstag und Bekanntmachung des Hinweises auf die Patenterteilung: **31.07.2024**
(21) Anmeldenummer: 22722413.6
(22) Anmeldetag: 07.04.2022
(51) Int. Cl.: H01M 8/248, H01M 8/0232, H01M 8/0239, H01M 8/10

(54) **BRENNSTOFFZELLENSTAPEL MIT KOMPRIMIERBARER GEWEBESTRUKTUR**
FUEL CELL STACK WITH COMPRESSIBLE FABRIC STRUCTURE
EMPILEMENT DE PILES À COMBUSTIBLE À STRUCTURE DE TISSU COMPRESSIBLE

(30) Priorität: 12.04.2021 DE 102021108981
(43) Veröffentlichungstag der Anmeldung: 20.09.2023
(73) Patentinhaber: AUDI AG, 85057 Ingolstadt (DE)
(72) Erfinder: GRETZER, Markus, 85072 Eichstätt (DE); KLUY, Norbert, 85132 Schernfeld (DE)
(74) Vertreter: Hentrich Patent- & Rechtsanwaltspartnerschaft mbB
(86) Internationale Anmeldenummer: PCT/EP2022/059253
(87) Internationale Veröffentlichungsnummer: WO 2022/218813

(56) Entgegenhaltungen:
- DE-A1- 102016 224 696
- DE-A1- 102018 203 827
- DE-A1- 102018 205 128
- DE-T5- 112011 103 324

## Beschreibung

Die Erfindung betrifft einen Brennstoffzellenstapel mit einer Mehrzahl von entlang einer Stapelrichtung übereinander gestapelten Brennstoffzellen Brennstoffzellenvorrichtungen werden für die chemische Umsetzung eines Brennstoffs mit Sauerstoff zu Wasser genutzt, um elektrische Energie zu erzeugen. Hierfür enthalten Brennstoffzellen als Kernkomponente die sogenannte Membran-Elektroden-Einheit (MEA für membrane electrode assembly), die ein Verbund aus einer protonenleitenden Membran und jeweils einer, beidseitig an der Membran angeordneten Elektrode (Anode und Kathode) ist. Zudem können Gasdiffusionslagen (GDL) beidseitig der Membran-Elektroden-Einheit an den der Membran abgewandten Seiten der Elektroden angeordnet sein. Im Betrieb der Brennstoffzellenvorrichtung mit einer Mehrzahl zu einem Brennstoffzellenstapel zusammengefasster Brennstoffzellen wird der Brennstoff, insbesondere Wasserstoff H₂ oder ein wasserstoffhaltiges Gasgemisch der Anode zugeführt, wo eine elektrochemische Oxidation von H₂ zu H⁺ unter Abgabe von Elektronen stattfindet. Über den Elektrolyten oder die Membran, welche die Reaktionsräume gasdicht voneinander trennt und elektrisch isoliert, erfolgt ein Transport der Protonen H⁺ aus dem Anodenraum in den Kathodenraum. Die an der Anode bereitgestellten Elektronen werden über eine elektrische Leitung der Kathode zugeleitet. Der Kathode wird Sauerstoff oder ein sauerstoffhaltiges Gasgemisch zugeführt, so dass eine Reduktion von O₂ zu O²⁻ unter Aufnahme der Elektronen stattfindet. Gleichzeitig reagieren im Kathodenraum diese Sauerstoffanionen mit den über die Membran transportierten Protonen unter Bildung von Wasser.

Die DE 10 2005 022 484 A1 zeigt eine Gasdiffusionsschicht, in die eine Schicht aus kompressiblen Gewebe integriert ist, welche das Eindrücken der Gasdiffusionslage in die Gaskanäle der Bipolarplatte verhindern soll.

Die DE 100 427 44 A1 offenbart eine Gasverteilerschicht für einen Brennstoffzellenstapel, welche aus einem kompressiblen Gewebe aufgebaut ist, um durch eine definierte Kompression der Gasverteilerschichten den Zellwiderstand zu erhöhen.

Die DE 43 401 53 C1 offenbart ein elektrisch leitendes, elastisches und gasdurchlässiges Kontaktkissen, mit einer verformbaren Oberflächenstruktur. Das Kontaktkissen dient dabei dem Ausgleich von Unebenheiten an der Oberfläche der Elektroden.

Die DE 10 2016 224 696 A1 offenbart eine Bipolarplatte zur Verwendung in einer Brennstoffzelle. Der Bipolarplatte und damit der Brennstoffzelle ist ein Gewebe zugeordnet. Das Gewebe ist aus mehreren Fasern gebildet, die aus unterschiedlichen Materialien bestehen. Das Gewebe ist dazu vorgesehen, Strukturen zur Verteilung der Reaktionsgase bereitzustellen, wobei das Gewebe elastische Eigenschaften aufweist, sodass das Gewebe auf Druckänderung mit einer Längenänderung reagiert

Die DE 11 2011 103 324 T5 offenbart eine Brennstoffzelle mit Kollektormaterial, das durch ein Metallfasergewebe gebildet ist und zwischen den Elektroden und den Separatoren mit Druck beaufschlagt wird. Es wird ausgeführt, dass im Stand der Technik als Kollektormaterial von Feststoffoxidbrennstoffzellen üblicherweise ein Metallgitter verwendet wird, das jedoch eine geringe Elastizität aufweist, weshalb sich der Kontaktzustand durch Veränderung aufgrund der Wärmeausdehnung der MEA-Zelle und Separator durch wiederholte Verwendung verändert, sodass sich die Stromerzeugungseffizienz verringert. Zur Verbesserung des elektrischen Kontaktes wird als Kollektormaterial ein plattenförmiges Metallfasergewebe verwendet.

Die DE 10 2010 203 827 A1 offenbart zur Verwendung in einem Brennstoffzellenstapel vorgesehene Brennstoffzellen, bei denen zum Verteilen der Reaktanten ein Gewebe verwendet wird, das mindestens zwei Arten von Fasern aufweist, wobei eine Basisfaser zum Herstellen einer Grundstruktur des Gewebes genutzt ist und eine Funktionsfaser beispielsweise zur mechanischen Kraftaufnehmung zwischen den Bipolarplatten genutzt wird. Dieses Gewebe weist elastische Eigenschaften auf, sodass bei einer Änderung der Betriebsbedingung sich auch eine Längenänderung des Gewebes ergibt.

Die DE 10 2018 205 128 A1 offenbart ein Verfahren zum Herstellen einer Brennstoffzelle, wobei ein Fluidleitelement mit einer Gewebestruktur zur Verteilung eines Brennstoffes vorgesehen ist. Die Gewebestruktur umfasst metallische Fasern, die mit Kunststoffelementen kombiniert werden.

Bei einer typischen Bauform des Brennstoffzellenstapels, werden die übereinander gestapelten Brennstoffzellen oder Einheitszellen außen mittels Fixierelementen, insbesondere mittels Bändern, zusammengehalten. Diese Fixierelemente sind an die beiden endständigen Brennstoffzellen des Brennstoffzellenstapels fixiert und halten diese in einem definierten und konstanten Abstand zueinander.

Nachteilig ist hierbei, dass die Länge der gestapelten Zellen während des Betriebs nicht konstant bleibt. Dies führt insbesondere dazu, dass die Implementierung und Positionierung von Anschlüssen erschwert wird, die beispielsweise für die Zellspannungsüberwachung benötigt werden.

Daher ist es Aufgabe der vorliegenden Erfindung, einen Brennstoffzellenstapel bereitzustellen, der eine konstante Stapellänge in allen Betriebszustände ermöglicht.

Diese Aufgabe wird mittels der Merkmale des Anspruchs 1 gelöst. Vorteilhafte Ausgestaltungen mit zweckmäßigen Weiterbildungen der Erfindung sind in den abhängigen Ansprüchen angegeben.

Der Brennstoffzellenstapel zeichnet sich insbesondere dadurch aus, dass mindestens eine der Brennstoffzellen mindestens eine komprimierbare Gewebestruktur aufweist, der eine Federfunktion mit einer Federkonstante zugeordnet ist, und dass mittels der Federfunktion eine Längenänderung der Brennstoffzelle entlang der Stapelrichtung durch eine dazu entgegengesetzte negative Längenänderung der komprimierbaren Gewebestruktur ausgleichbar ist.

In anderen Worten ermöglicht die Federfunktion der komprimierbaren Gewebestruktur einen Längenausgleich der Brennstoffzellen, in allen Betriebszuständen, so dass die Brennstoffzellen in Stapelrichtung unabhängig vom Betriebszustand immer eine definierte Länge aufweist. Eine Längenausdehnung der Brennstoffzelle in Stapelrichtung, aufgrund von thermischer Ausdehnung oder aufgrund einer hydrostatischen Längenänderung, die zu einem Anschwellen der Membranelektrodenanordnung führt, kann durch das Zusammendrücken der komprimierbaren Gewebestruktur somit vollständig ausgeglichen werden. Dabei kommt es aufgrund der thermischen oder hydrostatischen Längenänderung zu einer Druckerhöhung zwischen den Schichten, so dass die Federfunktion der komprimierbaren Gewebestruktur aktiviert und diese zusammengedrückt wird. Die Federfunktion der komprimierbaren Gewebestruktur verhindert somit eine aufgrund zu hoher Drücke auftretende Beschädigung der Komponenten der Brennstoffzelle und des Brennstoffzellenstapels. Innerhalb des Brennstoffzellenstapels, zwischen den beiden endständigen Brennstoffzellen, wirkt folglich eine spezifische Anpresskraft, die über alle Betriebsarten des Brennstoffzellenstapels konstant ist. Weiterhin ermöglicht eine konstante Stapellänge und Anpresskraft über alle Betriebszustände eine einfachere Implementierung einer Zellspannungsüberwachung in den Brennstoffzellenstapel, da die Kabellänge ohne Reserveschleifen ausgeführt werden kann. Dies führt zu einer Reduzierung des benötigten Bauraums. Ein weiterer Vorteil in einer über alle Betriebszustände konstanten Brennstoffzellenstapellänge ist darin zu sehen, dass die Länge aller stromführenden Teile konstant ausgeführt werden kann, insbesondere die Länge der Stromschienen.

In diesem Zusammenhang ist es bevorzugt, wenn jede der Brennstoffzellen mindestens eine komprimierbare Gewebestruktur mit zugeordneter Federfunktion aufweist.

Weiterhin ist es in diesem Zusammenhang von Vorteil, wenn verschiedene Brennstoffzellen komprimierbare Gewebestrukturen aufweisen, die sich in ihrer Federkonstante unterscheiden. Dies ermöglicht die Verwendung von unterschiedlichen komprimierbaren Gewebestrukturen in unterschiedlichen Bereichen des Brennstoffzellenstapels, so dass die Federkonstante in der Mitte, also im Kern des Brennstoffzellenstapels anders gewählt werden kann, als an den Enden des Brennstoffzellenstapels. Dadurch wird eine individuelle Anpassung und Steuerung der Anpresskraft über verschiedene Bereiche des Brennstoffzellenstapels erreicht.

Insbesondere ist es vorteilhaft, wenn die komprimierbare Gewebestruktur aus miteinander verwobenen Fasern gebildet ist, und dass die Federfunktion durch eine ungeordnete Anordnung der Fasern ausgebildet ist. In einer besonders einfachen Ausbildungsform wird die Federfunktion mittels einer geordneten Anordnung der Fasern ausgebildet. Alternativ oder zusätzlich ist es bevorzugt, wenn die komprimierbare Gewebestruktur durch wellenförmig ausgebildete Fasern gebildet ist, die die Federfunktion bereitstellen. Die Fasern der Gewebestruktur sind folglich nicht miteinander verwebt, sondern wellenförmig ausgebildet. Bevorzugt ist die mittlere Amplitude der wellenförmig ausgebildeten Faser höher als die mittlere Amplitude der Fasern der gewebten Gewebestruktur. Die komprimierbare Gewebestruktur kann dabei auch unregelmäßige Struktur aufweisen, das heißt dass sich die Amplituden der wellenförmig ausgebildeten Faser entlang der Gewebestruktur unterscheiden.

Alternativ oder zusätzlich ist es von Vorteil, wenn die Gewebestruktur aus miteinander verwobenen Fasern mit einer mittleren ersten Amplitude gebildet ist, und dass zur Bereitstellung der Federfunktion eine wellenförmig gebildete federnde Faser vorhanden ist, die den Fasern der Gewebestruktur zugeordnet oder mit dieser verwoben ist, und deren mittlere zweite Amplitude größer als die mittlere erste Amplitude der Fasern der Gewebestruktur ist.

Um die Federfunktion mit zugeordneter Federkonstante besonders einfach bereitstellen zu können, ist es bevorzugt, wenn die die Federfunktion bereitstellende Faser zumindest zum Teil aus einem Kunststoff oder aus einem Metall gebildet ist.

Die zwischen den endständigen Brennstoffzellen wirkende Anpresskraft kann dabei individuell für jede Brennstoffzelle und auch innerhalb der Brennstoffzelle gesteuert werden, indem die komprimierbare Gewebestruktur einen ersten Bereich aufweist, dem eine erste Federkonstante zugeordnet ist und einen zweiten Bereich aufweist, dem eine sich von der ersten Federkonstante unterscheidende zweite Federkonstante zugeordnet ist. Die komprimierbare Gewebestruktur kann auch mehr als zwei Bereiche aufweisen, die sich in ihrer Federkonstante unterscheiden.

Zur einfachen Implementierung der komprimierbaren Gewebestruktur ist es von Vorteil, wenn die Brennstoffzellen jeweils einen aktiven Bereich aufweisen, wenn eine erste Medienführung zum Transport eines ersten Reaktanten in den und/oder aus dem aktiven Bereich, eine zweite Medienführung zum Transport eines zweiten Reaktanten in den und/oder aus dem aktiven Bereich und eine dritte Medienführung zum Transport von Kühlmittel in den und/oder aus dem aktiven Bereich vorhanden ist, und dass mindestens einem der Medienführungen die komprimierbare Gewebestruktur zugeordnet oder in ihr angeordnet ist. Die Medienführung ist dabei bevorzugt als ein Flussfeld gebildet.

In diesem Zusammenhang ist es insbesondere von Vorteil, wenn eine Mehrzahl der Medienführungen die komprimierbaren Gewebestrukturen aufweisen, und wenn den komprimierbaren Gewebestrukturen der unterschiedlichen Medienführungen verschiedene Federkonstanten zugeordnet sind. Somit kann die Federung in den einzelnen Medienführungen oder Medienräumen unterschiedlich gestaltet und damit eingestellt werden. Dies erlaubt es auf die spezifischen Randbedingungen der verschiedenen Medienführungen einzugehen. So kann beispielsweise die Größe der die Reaktanten transportierenden oder aufweisenden Medienräume, also der Anodenraum und der Kathodenraum, in der Größe annähernd konstant gehalten werden, um die Zuführung des Brennstoffs und der Luft in den aktiven Bereich auch in einem hydrostatischen Zustand zu gewährleisten. Dagegen ist vorzugsweise der das Kühlmittel aufweisende dritte Medienraum am stärksten komprimierbar, weist also eine niedrigere Federkonstante als die Federkonstante der übrigen Medienräume auf. Somit ist es insbesondere bevorzugt, wenn die komprimierbare Gewebestruktur zumindest der das Kühlmittel transportierenden dritten Medienführung zugeordnet oder in ihr angeordnet ist.

Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen. Es sind somit auch Ausführungen als von der Erfindung umfasst und offenbart anzusehen, die in den Figuren nicht explizit gezeigt oder erläutert sind, jedoch durch separierte Merkmalskombinationen aus den erläuterten Ausführungen hervorgehen und erzeugbar sind.

Weitere Vorteile, Merkmale und Einzelheiten der Erfindung ergeben sich aus den Ansprüchen, der nachfolgenden Beschreibung bevorzugter Ausführungsformen sowie anhand der Zeichnungen. Dabei zeigen:
- Fig. 1: eine schematische Darstellung eines unkomprimierten Brennstoffzellenstapels,
- Fig. 2: eine schematische Darstellung eines komprimierten Brennstoffzellenstapels,
- Fig. 3: eine schematische Darstellung einer komprimierbaren Gewebestruktur,
- Fig. 4: eine schematische Darstellung einer weiteren komprimierbaren Gewebestruktur und

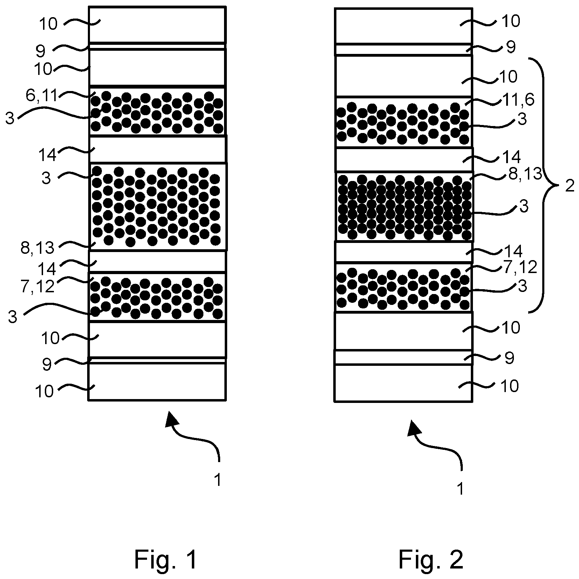

Figur 1 zeigt einen Brennstoffzellenstapel 1 mit einer Mehrzahl von Brennstoffzellen, die als Einheitszellen gebildet sein können. Jede Brennstoffzelle 2 ist aus einer Membranelektrodenanordnung 9 mit einem aktiven Bereich gebildet, der anodenseitig und kathodenseitig jeweils eine Bipolarplatte 14 zugeordnet ist. Zwischen der Membranelektrodenanordnung 9 und den Bipolarplatten 14 ist zudem jeweils eine kathodenseitige und eine anodenseitige Gasdiffusionslage 10 angeordnet. Die Bipolarplatte14 ist aus zwei miteinander gefügten Einzelplatten gebildet, von denen die eine eine erste Medienführung 6, also ein Kathodenflussfeld 11, und von denen die andere eine zweite Medienführung 7, also ein Anodenflussfeld 12, bereitstellt. Dazwischen ist eine dritte Medienführung 8, nämlich ein Kühlmittelflussfeld 13, ausgebildet. Den Medienführungen 6, 7, 8 ist jeweils eine komprimierbare Gewebestruktur 3 zugeordnet oder in ihr angeordnet, der eine Federfunktion mit einer Federkonstante zugeordnet ist. Die Federfunktion ermöglicht dabei, dass eine Längenänderung der Brennstoffzelle 2 entlang einer Stapelrichtung durch eine dazu entgegengesetzte negative Längenänderung der komprimierbaren Gewebestruktur 3 ausgeglichen wird. In anderen Worten ermöglicht die Federfunktion der komprimierbaren Gewebestruktur 3 einen Längenausgleich der Brennstoffzelle 2, in allen Betriebszuständen, so dass die Brennstoffzellen 2 in Stapelrichtung und damit der Brennstoffzellenstapel 1 unabhängig vom Betriebszustand immer eine definierte Länge aufweist.

Figur 2 zeigt den Brennstoffzellenstapel 1, bei dem die komprimierbaren Gewebestrukturen 3 teilweise komprimiert sind. Durch eine thermische oder hydrostatische Ausdehnung beispielsweise der Membranelektrodenanordnung 9, kommt es zu einer Druckerhöhung zwischen den endständigen Brennstoffzellen 2 des Brennstoffzellenstapels 1. Diese Druckerhöhung wird durch eine Kompression der komprimierbaren Gewebestruktur 3 ausgeglichen, so dass innerhalb des Brennstoffzellenstapels 1 zwischen den beiden endständigen Brennstoffzellen eine spezifische Anpresskraft wirkt, die über alle Betriebsarten des Brennstoffzellenstapels 1 konstant ist und die Länge des Brennstoffzellenstapels ebenfalls konstant bleibt.

Figur 2 verdeutlicht allerdings auch, dass die komprimierbaren Gewebestrukturen 3 unterschiedliche Federkonstanten aufweisen können. Somit kann die Federung in den einzelnen Medienführungen 6, 7, 8 oder Flussfeldern 11, 12, 13 unterschiedlich gestaltet und damit eingestellt werden kann. Vorliegend weisen die Gewebestrukturen 3 der ersten Medienführung 6 und der zweiten Medienführung 7, also des Anodenflussfelds 11 und des Kathodenflussfelds 12 eine höhere Federkonstante auf, als die der dritten Medienführung 8, also des Kühlmittelflussfelds 13. Folglich wird die komprimierbare Gewebestruktur des Kühlmittelflussfelds 13 am stärksten komprimiert, während die dem Anodenflussfeld 12 und dem Kathodenflussfeld 11 zugeordnete oder in ihr angeordnete Gewebestruktur 3 nur geringfügig komprimierbar ist. Dadurch bleibt die Größe der Anodenräume und die Kathodenräume annährend konstant, bei dennoch konstanter Anpresskraft und konstanter Brennstoffzellenstapellänge.

Weiterhin ist es auch möglich, dass verschiedene Brennstoffzellen 2 innerhalb des Brennstoffzellenstapels 1 komprimierbare Gewebestrukturen 3 mit sich unterscheidenden Federkonstanten aufweisen. Beispielsweise können die Federkonstanten in der Mitte, also im Kern des Brennstoffzellenstapels 1, anders gewählt werden, als an den Enden des Brennstoffzellenstapels 1.

Darüber hinaus können die komprimierbaren Gewebestrukturen 3 auch einen ersten Bereich aufweisen, dem eine erste Federkonstante zugeordnet ist und einen zweiten Bereich aufweisen, dem eine sich von der ersten Federkonstante unterscheidende zweite Federkonstante zugeordnet ist.

In den Figuren 1 und 2 ist die Federfunktion der komprimierbaren Gewebestruktur 3 durch eine regelmäßige Anordnung von miteinander verwobenen Fasern 4 gebildet. Alternativ und nicht gezeigt, könnte die Federfunktion auch durch eine unregelmäßige Anordnung von miteinander verwobenen Fasern 4 bereit gestellt werden.

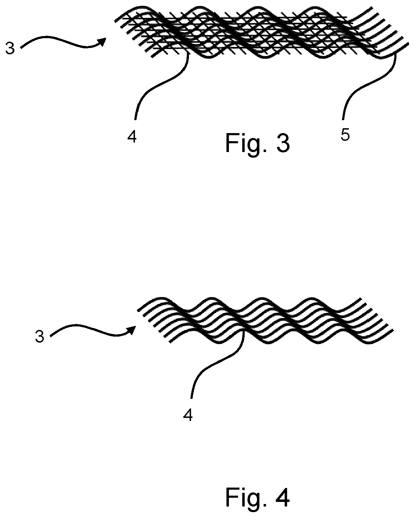

Eine weitere Alternative der komprimierbaren Gewebestruktur 3 ist in Figur 3 gezeigt. Dabei weist die komprimierbare Gewebestruktur 3 miteinander verwobene Fasern 4 mit einer mittleren ersten Amplitude auf. Zur Bereitstellung einer Federfunktion sind wellenförmig gebildete federnde Fasern 5 mit einer mittleren zweiten Amplitude vorhanden. Die mittlere zweite Amplitude ist dabei größer als die mittlere erste Amplitude, so dass eine Federfunktion mit einer Federkonstante durch die federnde Faser 5 bereitgestellt werden kann.

In Fig. 4 zeigt eine weitere Ausführungsform der komprimierbaren Gewebestruktur 3, bei der die Federfunktion bereitgestellt wird, indem die Fasern 4 selber wellenförmig gebildet sind, also nicht miteinander verwoben sind.

Die die Federfunktion bereitstellenden Fasern 4,5 sind dabei zumindest zum Teil aus einem Kunststoff oder aus einem Metall gebildet.

### BEZUGSZEICHENLISTE:

- 1: Brennstoffzellenstapel
- 2: Brennstoffzelle
- 3: komprimierbare Gewebestruktur
- 4: Faser
- 5: federnde Faser
- 6: erste Medienführung
- 7: zweite Medienführung
- 8: dritte Medienführung
- 9: Membranelektrodenanordnung
- 10: Gasdiffusionslage
- 11: Kathodenflussfeld
- 12: Anodenflussfeld
- 13: Kühlmittelflussfeld
- 14: Bipolarplatte

## Patentansprüche

1. Brennstoffzellenstapel (1) mit einer Mehrzahl von entlang einer Stapelrichtung übereinander gestapelten Brennstoffzellen (2), wobei mindestens eine der Brennstoffzellen (2) mindestens eine komprimierbare Gewebestruktur (3) aufweist, der eine Federfunktion mit einer Federkonstante zugeordnet ist, wobei mittels der Federfunktion eine Längenänderung der Brennstoffzelle (2) entlang der Stapelrichtung durch eine dazu entgegengesetzte negative Längenänderung der komprimierbaren Gewebestruktur (3) ausgleichbar ist, **dadurch gekennzeichnet, dass** die Federfunktion der komprimierbaren Gewebestruktur (3) einen Längenausgleich der Brennstoffzellen (2) in allen Betriebszuständen ermöglicht, so dass die Brennstoffzellen (2) in Stapelrichtung unabhängig vom Betriebszustand eine definierte Länge aufweisen.

2. Brennstoffzellenstapel (1) nach Anspruch 1, **dadurch gekennzeichnet, dass** jede der Brennstoffzellen (2) mindestens eine komprimierbare Gewebestruktur (3) mit zugeordneter Federfunktion aufweist.

3. Brennstoffzellenstapel (1) nach Anspruch 1 oder 2, **dadurch gekennzeichnet, dass** die komprimierbare Gewebestruktur (1) aus miteinander verwobenen Fasern (4) gebildet ist, und dass die Federfunktion durch eine ungeordnete Anordnung der Fasern (4) ausgebildet ist.

4. Brennstoffzellenstapel (1) nach Anspruch 1 oder 2, **dadurch gekennzeichnet, dass** die komprimierbare Gewebestruktur (3) durch wellenförmig ausgebildete Fasern (4) gebildet ist, die die Federfunktion bereitstellen.

5. Brennstoffzellenstapel (1) nach Anspruch 1 oder 2, **dadurch gekennzeichnet, dass** die komprimierbare Gewebestruktur (3) aus miteinander verwobenen Fasern (4) mit einer mittleren ersten Amplitude gebildet ist, und dass zur Bereitstellung der Federfunktion eine wellenförmig gebildete federnde Faser (5) vorhanden ist, die den Fasern (4) der Gewebestruktur (3) zugeordnet oder mit dieser verwoben ist, und deren mittlere zweite Amplitude größer als die mittlere erste Amplitude ist.

6. Brennstoffzellenstapel (1) nach einem der Ansprüche 3 bis 5, **dadurch gekennzeichnet, dass** die die Federfunktion bereitstellende Faser (4,5) zumindest teilweise aus einem Kunststoff oder aus einem Metall gebildet ist.

7. Brennstoffzellenstapel (1) nach einem der Ansprüche 1 bis 6, **dadurch gekennzeichnet, dass** die komprimierbare Gewebestruktur (3) einen ersten Bereich aufweist, dem eine erste Federkonstante zugeordnet ist und einen zweiten Bereich aufweist, dem eine sich von der ersten Federkonstante unterscheidende zweite Federkonstante zugeordnet ist.

8. Brennstoffzellenstapel (1) nach einem der Ansprüche 1 bis 7, **dadurch gekennzeichnet, dass** die Brennstoffzellen (2) jeweils einen aktiven Bereich aufweisen, dass eine erste Medienführung (6) zum Transport eines ersten Reaktanten in den und/oder aus dem aktiven Bereich, eine zweite Medienführung (7) zum Transport eines zweiten Reaktanten in den und/oder aus dem aktiven Bereich und eine dritte Medienführung (8) zum Transport von Kühlmittel in den und/oder aus dem aktiven Bereich vorhanden ist, und dass mindestens einem der Medienführungen (6, 7, 8) die komprimierbare Gewebestruktur (3) zugeordnet oder in ihr angeordnet ist.

9. Brennstoffzellenstapel (1) nach Anspruch 8, **dadurch gekennzeichnet, dass** eine Mehrzahl der Medienführungen (6, 7, 8) die komprimierbaren Gewebestrukturen (3) aufweisen, und dass den komprimierbaren Gewebestrukturen (3) der unterschiedlichen Medienführungen (6, 7, 8) verschiedene Federkonstanten zugeordnet sind.

10. Brennstoffzellenstapel (1) nach Anspruch 8 oder 9, dass die komprimierbare Gewebestruktur (3) der das Kühlmittel transportierenden dritten Medienführung (8) zugeordnet oder in ihr angeordnet ist.

## Claims

1. A fuel cell stack (1) having a plurality of fuel cells (2) stacked on top of one another along a stacking direction, at least one of the fuel cells (2) having at least one compressible fabric structure (3) to which a spring function with a spring constant is assigned, wherein a change in length of the fuel cell (2) along the stacking direction can be compensated by means of the spring function by a negative change in length of the compressible fabric structure (3) which is opposite thereto, **characterized in that** the spring function of the compressible fabric structure (3) enables length compensation of the fuel cells (2) in all operating states, so that the fuel cells (2) have a defined length in the stacking direction irrespective of the operating state.

2. The fuel cell stack (1) according to claim 1, **characterized in that** each of the fuel cells (2) has at least one compressible fabric structure (3) with an associated spring function.

3. The fuel cell stack (1) according to claim 1 or 2, **characterized in that** the compressible fabric structure (1) is formed from interwoven fibres (4), and **in that** the spring function is formed by a disordered arrangement of the fibres (4).

4. The fuel cell stack (1) according to claim 1 or 2, **characterized in that** the compressible fabric structure (3) is formed by undulating fibres (4) which provide the spring function.

5. The fuel cell stack (1) according to claim 1 or 2, **characterized in that** the compressible fabric structure (3) is formed from interwoven fibres (4) with an average first amplitude, and **in that**, to provide the spring function, there is a resilient fibre (5) which is formed in the shape of a wave, and which is associated with the fibres (4) of the compressible fabric structure (3) or is interwoven with the latter, and whose average second amplitude is greater than the average first amplitude.

6. The fuel cell stack (1) according to any one of claims 3 to 5, **characterized in that** the fibre (4, 5) providing the spring function is formed at least partially from a plastic or from a metal.

7. The fuel cell stack (1) according to any one of claims 1 to 6, **characterized in that** the compressible fabric structure (3) has a first region to which a first spring constant is assigned and a second region to which a second spring constant different from the first spring constant is assigned.

8. The fuel cell stack (1) according to any one of claims 1 to 7, **characterized in that** the fuel cells (2) each have an active region, **in that** a first media duct (6) for transporting a first reactant into and/or out of the active region, a second media duct (7) for transporting a second reactant into and/or out of the active region and a third media duct (8) for transporting coolant into and/or out of the active region are present, and **in that** the compressible fabric structure (3) is assigned to or arranged in at least one of the media ducts (6, 7, 8).

9. The fuel cell stack (1) according to claim 8, **characterized in that** a plurality of the media guides (6, 7, 8) have the compressible fabric structures (3), and **in that** different spring constants are assigned to the compressible fabric structures (3) of the different media guides (6, 7, 8).

10. The fuel cell stack (1) according to claim 8 or 9, in that the compressible fabric structure (3) is assigned to or arranged in the third media duct (8) transporting the coolant.

## Revendications

1. Empilement de piles à combustible (1) avec une pluralité de piles à combustible (2) empilées les unes sur les autres le long d'une direction d'empilement, dans lequel au moins l'une des piles à combustible (2) présente au moins une structure de tissu compressible (3) à laquelle est associée une fonction de ressort avec une constante de ressort, dans lequel une variation de longueur de la pile à combustible (2) peut être compensée le long de la direction d'empilement au moyen de la fonction de ressort par une variation de longueur négative de la structure de tissu compressible (3), opposée à celle-ci, **caractérisé en ce que** la fonction de ressort de la structure de tissu compressible (3) permet une compensation de longueur des piles à combustible (2) dans tous les états de fonctionnement, de sorte que les piles à combustible (2) présentent une longueur définie dans une direction d'empilement, indépendamment de l'état de fonctionnement.

2. Empilement de piles à combustible (1) selon la revendication 1, **caractérisé en ce que** chacune des piles à combustible (2) présente au moins une structure de tissu compressible (3) avec fonction de ressort associée.

3. Empilement de piles à combustible (1) selon la revendication 1 ou 2, **caractérisé en ce que** la structure de tissu compressible (1) est formée à partir de fibres (4) entrelacées, et **en ce que** la fonction de ressort est formée par un agencement désordonné de fibres (4).

4. Empilement de piles à combustible (1) selon la revendication 1 ou 2, **caractérisé en ce que** la structure de tissu compressible (3) est formée par des fibres (4) de forme ondulée qui fournissent la fonction de ressort.

5. Empilement de piles à combustible (1) selon la revendication 1 ou 2, **caractérisé en ce que** la structure de tissu compressible (3) est formée à partir de fibres (4) entrelacées avec une première amplitude moyenne, et **en ce qu'**une fibre élastique (5) de forme ondulée est disponible pour la fourniture de la fonction de ressort, fibre qui est associée aux fibres (4) de la structure de tissu (3) ou est tissée avec celle-ci, et dont la seconde amplitude moyenne est supérieure à la première amplitude moyenne.

6. Empilement de piles à combustible (1) selon l'une quelconque des revendications 3 à 5, **caractérisé en ce que** la fibre (4, 5) fournissant la fonction de ressort est formée au moins partiellement à partir d'une matière plastique ou à partir d'un métal.

7. Empilement de piles à combustible (1) selon l'une quelconque des revendications 1 à 6, **caractérisé en ce que** la structure de tissu compressible (3) présente une première zone à laquelle est associée une première constante de ressort et présente une seconde zone à laquelle est associée une seconde constante de ressort différente de la première constante de ressort.

8. Empilement de piles à combustible (1) selon l'une quelconque des revendications 1 à 7, **caractérisé en ce que** les piles à combustible (2) présentent respectivement une zone active, **en ce qu'**un premier guidage de fluide (6) est disponible pour le transport d'un premier réactif dans et/ou à partir de la zone active, un deuxième guidage de fluide (7) pour le transport d'un second réactif dans et/ou à partir de la zone active et un troisième guidage de fluide (8) pour le transport de liquide réfrigérant dans et/ou à partir de la zone active, et **en ce que** la structure de tissu compressible (3) est associée à au moins l'un des guidages de fluide (6, 7, 8) ou est disposée dans celui-ci.

9. Empilement de piles à combustible (1) selon la revendication 8, **caractérisé en ce qu'**une pluralité de guidages de fluide (6, 7, 8) présente les structures de tissu compressibles (3), et **en ce que** différentes constantes de ressort sont associées aux structures de tissu compressibles (3) des différents guidages de fluide (6, 7, 8).

10. Empilement de piles à combustible (1) selon la revendication 8 ou 9, **caractérisé en ce que** la structure de tissu compressible (3) est associée au troisième guidage de fluide (8) transportant le liquide de refroidissement et est disposée dans celui-ci.
